# EUROPEAN PATENT APPLICATION

(11) **EP 2 518 948 A1**
(43) Date of publication of application: **31.10.2012**
(21) Application number: 10838575.8
(22) Date of filing: 11.08.2010
(51) Int. Cl.: H04L 12/437

(54) **METHODS, SYSTEM AND APPARATUS FOR PROTECTING CONTROL VIRTUAL LOCAL NETWORK IN ETHERNET RING NETWORK**

(30) Priority: 25.12.2009 CN 200910252543
(71) Applicant: ZTE Corporation, Shenzhen, Guangdong 518057 (CN)
(72) Inventor: CHEN, Ling, Guangdong 518057 (CN)
(74) Representative: Anderson, Angela Mary
(86) International application number: PCT/CN2010/075910
(87) International publication number: WO 2011/076012

(57) **Abstract**

The present invention discloses a method, system and apparatus for protecting a control Virtual Local Network in an Ethernet ring network. The method comprises: in a process of creating an Ethernet Automatic Protection Switching (EAPS) domain, node devices defined as Ethernet network nodes setting a mode for processing received messages in the control VLAN according to additional information in a protocol message which can distinguish different types of protocol messages, and then opening forwarding function of ports in a ring within the control VLAN. According to the present invention, when a domain is created, occurrence of broadcast storm and packet-loss phenomenon is prevented by taking a series of measures, such as closing forwarding function of ports on the ring within the control VLAN, and receivable protocol messages are set in order to control the VLAN, such that non-protocol messages are not processed, thus the normal operation of the control VLAN is ensured after opening the forwarding function of the ports on the ring within the control VLAN.

## Description

### Technical Field

The present invention relates to the Ethernet automatic protection technology, and in particular, to a method, system and apparatus for protecting a control VLAN (Virtual Local Network) in an Ethernet ring network.

### Background Art

With the rapid development of the Internet, IP networks have increasingly become indispensible tools in people's daily work and life.

The RFC3619 defines an EAPS (Ethernet Automatic Protection Switching) method, which solves the problem of slow fault convergence occurring in Ethernet devices in a ring network topology structure such that the convergence time is within 50ms.

The EAPS method defines some basic concepts, for example, each EAPS physical ring is composed of a plurality of nodes connected with each other, and the nodes are divided into transit nodes and master nodes, depending on their functions. On the ring multiple logic domains can be configured, each being composed of a unique master node and a plurality of transit nodes as well as ports on the ring. Each domain further comprises a set of protection service VLANs for forwarding user service data, and a control VLAN for transmitting EAPS protocol messages. For a particular domain, a primary port (i.e., port P) of the master node periodically sends health monitoring hello frames, which are transmitted in the control VLAN. When links are in good condition, the master node can receive the hello frames from a secondary port (i.e., port S). Generally, the master node, by blocking the data forwarding function of the protection service VLANs of the secondary port, ensures that no ring will be formed in the protection service VLANs, thereby efficiently avoiding "broadcast storm".

In the VLAN, one data frame or packet being transmitted to each node of a local network segment defined by a broadcast domain is called as broadcast. Because a great deal of reproductions of the broadcast within the network segment is caused by design and connection of the network topology, a lot of data frames or packets are propagated, thus causing deterioration of network performance, even network paralysis. This is broadcast storm.

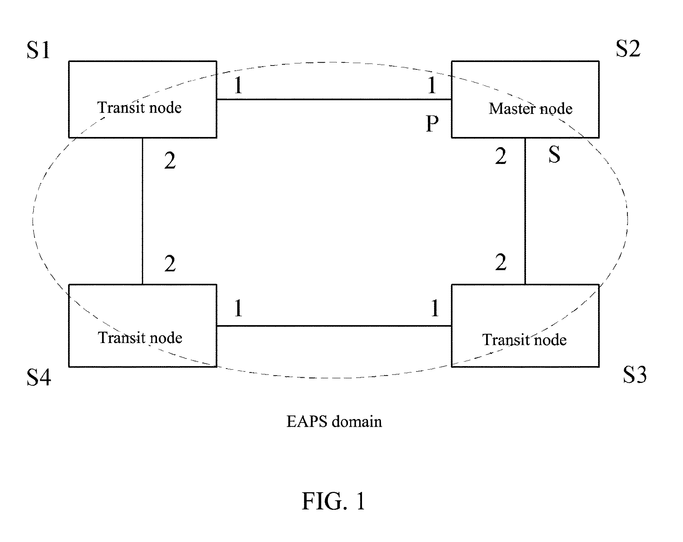

An Ethernet automatic protection system in a normal operating state, as shown in FIG. 1, consists of nodes S1, S2, S3 and S4. An Ethernet protection domain, i.e., an EAPS domain, is configured on a ring composed of the four nodes. A master node in the nodes is S2, and the other nodes are transit nodes. The master node S2 has two ports on the ring, port 1 which is a primary port (i.e., port P) and port 2 which is a secondary port (i.e., port S). Moreover, a control VLAN and several protection service VLANs (not shown) are defined in the protection domain, and all ports on the ring are configured in the control VLAN and the protection service VLANs.

In the prior art, the protection service VLANs can be protected by the EAPS method, and other VLANs are protected by generating the STP (Spanning Tree Protocol) by default. However, how to protect the control VLAN in the EAPS method is not explicitly set forth.

If the control VLAN is protected by the STP, since the STP determines to block a certain port according to priorities of the nodes through automatic calculation, the following case will occur. If the determined port to be blocked is on a transit node, once ports on the ring on the transit node are blocked, protocol messages, such as health monitoring HELLO messages and link fault alarm LINK-DOWN messages, will be unable to be forwarded, and these messages cannot be received by the master node, so that the ring network cannot operate normally.

If the control VLAN is used as a protection service VLAN and is protected by the EAPS method, then two cases will occur. In the first case, when the EAPS protocol is initialized (has not operated normally yet), the broadcast storm is required to be avoided by blocking at least one port on the ring, which will cause protocol messages, such as health monitoring HELLO and link fault alarm LINK-DOWN, to be unable to be forwarded, and the master node cannot receive these messages, so that the ring network cannot operate normally. In the second case, if the secondary port blocks the control VLAN, all of the protocol messages can be received by the master node, and the protocol cannot be implemented normally, so that the EAPS protocol cannot operate normally.

Since the control VLAN defined in RFC3619 is a special VLAN, it may enable the protocol messages defined by the EAPS to pass through all ports in the EAPS domain. Therefore, this control VLAN playing a particular role can neither be protected as a protection service VLAN defined in the existing EAPS method, nor be protected as a common VLAN by the STP protocol. Therefore, a new protection method needs to be proposed to avoid formation of broadcast storm in the VLAN.

### Summary of the Invention

The present invention provides a method for protecting a control VLAN (Virtual Local Network) in an Ethernet ring network such that the control VLAN can operate normally.

In order to solve the existing technical problem, the present invention provides a method for protecting a control VLAN (Virtual Local Network) in an Ethernet ring network comprising the following steps of:
in a process of creating an Ethernet Automatic Protection Switching (EAPS) domain, node devices defined as Ethernet network nodes setting a mode for processing received messages in the control VLAN according to additional information in a protocol message which can distinguish different types of protocol messages, and then opening forwarding function of ports in a ring within the control VLAN.

In the method in accordance with the present invention, the additional information in the protocol message which can distinguish different types of protocol messages may include any one of destination MAC address field information and message type field information.

The Ethernet network nodes may be classified as master nodes and transit nodes, and the mode for processing protocol messages may comprise:
when destination MAC addresses of the protocol messages are within an address range of control protocol messages, or when the protocol messages are indicated as control protocol messages by the message type field information, directly forwarding the protocol messages or forwarding and/or sending the protocol messages to a CPU for processing on transit nodes, and sending the protocol messages to a CPU for processing on a master node; and
when the destination MAC addresses of the protocol messages are outside the address range of the control protocol messages, or when the protocol messages are indicated as non-control protocol messages by the message type field information, directly discarding the protocol messages.

Before the step of the node devices setting the mode for processing the received messages in the control VLAN, the method may further comprise:
closing the forwarding function of the ports on the ring within the control VLAN, and/or actively adding the ports on the ring to the control VLAN.

The present invention further provides a system for protecting a control VLAN (Virtual Local Network) in an Ethernet ring network comprising a plurality of node devices defined as Ethernet nodes, wherein
the node devices are configured to, in a process of creating an Ethernet Automatic Protection Switching (EAPS) domain, set a mode for processing received messages in the control VLAN according to additional information in a protocol message which can distinguish different types of protocol messages, and then open forwarding function of ports in a ring within the control VLAN.

In the system in accordance with the present invention, the additional information in the protocol message which can distinguish different types of protocol messages may include any one of destination MAC address field information and message type field information.

The node devices may be configured to set the mode for processing the received protocol messages in the control VLAN by:
when destination MAC addresses of the protocol messages are within an address range of control protocol messages, or when the protocol messages are indicated as control protocol messages by the message type field information, directly forwarding the protocol messages or forwarding and/or sending the protocol messages to a CPU for processing on transit nodes if the node devices are the transit nodes, and sending the protocol messages to a CPU for processing on a master node if the node device is the master node; and
when the destination MAC addresses of the protocol messages are outside the address range of the control protocol messages, or when the protocol messages are indicated as non-control protocol messages by the message type field information, directly discarding the protocol messages.

The node devices may be configured to, before setting the mode for processing the received messages in the control VLAN, close the forwarding function of the ports on the ring within the control VLAN, and/or actively add the ports on the ring to the control VLAN.

The present invention further provides an apparatus for protecting a control VLAN (Virtual Local Network) in an Ethernet ring network, which is used in node devices defined as Ethernet nodes and comprises a domain creating module, a mode setting module and a port-on-ring preprocessing module, wherein
the domain creating module is configured to output a mode setting instruction to the mode setting module in a process of creating an Ethernet Automatic Protection Switching (EAPS) domain;
the mode setting module is configured to set a mode for processing received messages in the control VLAN according to additional information in a protocol message which can distinguish different types of protocol messages after receiving the mode setting instruction, and then output an instruction of opening a control VLAN function to the port-on-ring preprocessing module; and
the port-on-ring preprocessing module is configured to open forwarding function of ports on a ring within the control VLAN according to the instruction of opening the control VLAN function.

In the apparatus in accordance with the present invention, the additional information in the protocol message which can distinguish different types of protocol messages may include any one of destination MAC address field information and message type field information.

The mode setting module may be configured to set the mode for processing the received protocol messages in the control VLAN by:
when destination MAC addresses of the protocol messages are within an address range of control protocol messages, or when the protocol messages are indicated as control protocol messages by the message type field information, directly forwarding the protocol messages or forwarding and/or sending the protocol messages to a CPU for processing on transit nodes if the node devices are the transit nodes, and sending the protocol messages to a CPU for processing on a master node if the node device is the master node; and
when the destination MAC addresses of the protocol messages are outside the address range of the control protocol messages, or when the protocol messages are indicated as non-control protocol messages by the message type field information, directly discarding the protocol messages.

The domain creating module is further configured to output a preprocessing instruction to the port-on-ring preprocessing module before outputting the mode setting instruction.

The port-on-ring preprocessing module is further configured to close the forwarding function of the ports on the ring within the control VLAN and/or actively add the ports on the ring to the control VLAN according to the preprocessing instruction.

The method in accordance with the present invention is applied in an Ethernet system, and treats the control VLAN as a special case. When a domain is created, the occurrence of broadcast storm and packet-loss phenomenon can be prevented by taking a series of measures, such as closing the forwarding function of the ports on the ring within the control VLAN, and receivable protocol messages are set in order to control the VLAN, such that non-protocol messages are not processed, thus the normal operation of the control VLAN is ensured after opening the forwarding function of the ports on the ring within the control VLAN, thereby efficiently protecting the control VLAN from broadcast storm, and improving the anti-fault ability of the Ethernet in practical networking.

### Brief Description of Drawings

FIG. 1 is a schematic diagram of a topology structure of networking of an Ethernet ring network protection system;
FIG. 2 is a flowchart of a method for protecting a control VLAN in an Ethernet ring network according to an embodiment of the present invention; and
FIG. 3 is a block diagram of an apparatus for protecting a control VLAN in an Ethernet ring network according to an embodiment of the present invention.

### Preferred Embodiments of the Present Invention

A technical solution of the present invention will be described below in further detail in conjunction with the accompanying drawings and preferred embodiments. The embodiments exemplified below are only used to describe and explain the present invention, and not to limit the technical solution of the present invention.

A method for protecting a control VLAN in an Ethernet ring network according to the present invention comprises:
in a process of creating an Ethernet Automatic Protection Switching (EAPS) domain, node devices defined as Ethernet network nodes setting a mode for processing received messages in the control Virtual Local Network (VLAN) according to additional information in a protocol message which can distinguish different types of protocol messages, and then opening forwarding function of ports on a ring within the control VLAN.

Here, the additional information in the protocol message, for example, destination MAC address field information of the protocol message, can distinguish different types of protocol messages according to destination MAC addresses; as another example, message type field information of the protocol message can also distinguish different protocol messages.

During the process of creating the domain (i.e., the EAPS domain), the node devices on the ring firstly close the forwarding function of the ports on the ring within the control VLAN, and actively adds the ports on the ring to the control VLAN, and then sets the mode for processing the received messages within the control VLAN.

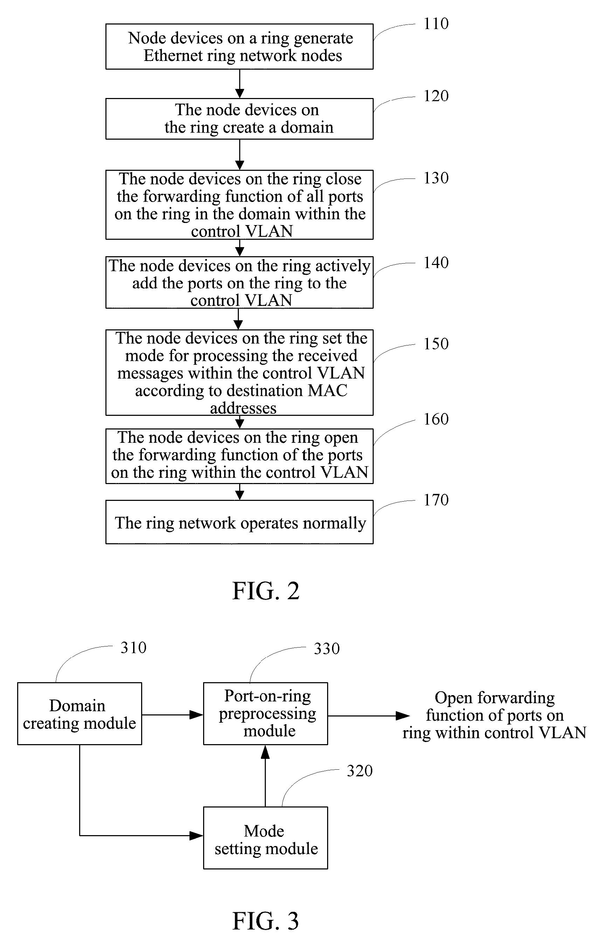

FIG. 2 is a flow chart of an application example of the embodiment described above, which comprises the following steps.

In step 110, node devices on a ring generate Ethernet ring network nodes.

The node devices (e.g., switches) on the ring define their generated nodes as a master node or transit nodes of the Ethernet.

In step 120, the node devices on the ring create a domain.

Herein, all the node devices on the ring create their generated nodes within the EAPS domain. That is, the EAPS method is extended by the present invention so that the control VLAN can be protected through the extended EAPS method.

In step 130, the node devices on the ring close the forwarding function of all the ports on the ring in the domain within the control VLAN.

Such a measure is taken to prevent occurrence of broadcast storm during starting initialization of the control VLAN.

In step 140, the node devices on the ring actively add the ports on the ring in the domain to the control VLAN.

The node devices on the ring do so in order to avoid occurrence of packet loss phenomenon.

In step 150, the node devices on the ring set the mode for processing the protocol messages within the control VLAN according to destination MAC addresses.

Destination MAC addresses of various types of protocol messages, such as health monitoring HELLO, link fault alarm LINK-DOWN, and other non-protocol messages, are different, or their message types are different, which is reflected on the additional information in the protocol message, i.e., accordingly, destination MAC address field information or message type field information of the protocol messages is different.

Therefore, the application example sets the destination MAC address range of receivable protocol messages for the control VLAN. The control VLAN can distinguish which messages are protocol messages that must be received and processed and/or forwarded, and which messages are protocol messages that may be discarded by determining the destination MAC addresses of the protocol messages received by the ports on the ring during operation, so as to process the messages accordingly, thereby preventing the control VLAN from generating broadcast storm.

There are several processing modes, which will be described below, depending on the node types.

When the destination MAC addresses of the protocol messages are within an address range of control protocol messages, the protocol messages are directly forwarded or forwarded and sent to a CPU for processing on transit nodes; and when the destination MAC addresses of the protocol messages are outside the address range of the control protocol messages, the protocol messages are directly discarded.

For example, health monitoring HELLO frames and link fault alarm LINK-DOWN frames are processed on the master node by directly sending to the CPU for processing; and they are processed on the transit nodes by directly forwarding.

Link fault notification and link recovery notification frames, DOWN_FLUSH and UP_FULSH frames, are processed on the master node by directly sending to the CPU for processing; and they are processed on the transit nodes by forwarding and sending to the CPU.

In step 160, the node devices on the ring open the forwarding function of the ports on the ring within the control VLAN.

Since the mode for processing the received protocol messages has been set for the control VLAN in step 150, when the forwarding function of the ports on the ring within the control VLAN is opened, the protocol messages can be processed normally.

In step 170, the ring network operates normally.

For the above method, the present invention further provides an embodiment of a system for protecting a control VLAN in an Ethernet ring network accordingly. The system comprises a plurality of node devices defined as Ethernet nodes and is applied in a process of creating an EAPS domain, sets a mode for processing received messages in the control VLAN according to additional information in a protocol message which can distinguish different types of protocol messages, and then opens the forwarding function of the ports on the ring within the control VLAN.

For example, the node devices set the mode for processing the received messages in the control VLAN according to the destination MAC address field information or message type field information of the protocol messages.

During the process of creating the EAPS domain, the node devices on the ring firstly close the forwarding function of the ports in the ring within the control VLAN, and/or actively add the ports on the ring to the control VLAN, and then set again the mode for processing the received messages within the control VLAN.

The present invention further provides an embodiment of an apparatus for protecting a control VLAN in an Ethernet ring network accordingly. The structure of the apparatus is shown in FIG. 3, and comprises a domain creating module 310, a mode setting module 320 and a port-on-ring preprocessing module 330.

The domain creating module 310 is configured to output a mode setting instruction to the mode setting module 320 in a process of creating an Ethernet Automatic Protection Switching (EAPS) domain.

The mode setting module 320 is configured to set a mode for processing received messages in the control VLAN according to additional information in a protocol message which can distinguish different types of protocol messages after receiving the mode setting instruction, and then output an instruction of opening a control VLAN function to the port-on-ring preprocessing module 330.

The port-on-ring preprocessing module 330 is configured to open forwarding function of ports on a ring within the control VLAN according to the instruction of opening the control VLAN function.

The mode setting module 320 directly forwards the protocol messages or forwards and/or sends the protocol messages to a CPU for processing on transit nodes and sends the protocol messages to a CPU for processing on a master node when destination MAC addresses of the protocol messages are within an address range of control protocol messages or when the protocol messages are indicated as control protocol messages by the message type field information, and directly discards the protocol messages when the destination MAC addresses of the protocol messages are outside the address range of the control protocol messages or when the protocol messages are indicated as non-control protocol messages by the message type field information.

The domain creating module 310 further outputs a preprocessing instruction to the port-on-ring preprocessing module 330 during the process of creating the EAPS domain.

The port-on-ring preprocessing module 330 closes the forwarding function of the ports on the ring within the control VLAN and/or actively adds the ports on the ring to the control VLAN according to the preprocessing instruction.

In the method, system and apparatus in accordance with the present invention applied in the Ethernet system, each node device sets receivable protocol messages for the control VLAN after creating a domain such that non-protocol messages are not processed, while preventing occurrence of broadcast storm and packet-loss phenomenon, therefore normal operation of the control VLAN is ensured after the forwarding function of the ports on the ring within the control VLAN is opened, thus efficiently protecting the control VLAN from broadcast storm, and improving the anti-fault ability of the Ethernet in practical networking.

The embodiments described above are only the preferred embodiments of the present invention and are not intended to limit the protection scope of the present invention. Any modification, equivalent substitution and variation made within the spirit and principle of the present invention should be covered in the protection scope of the appended claims of the present invention.

### Industrial Applicability

Compared with the prior art, the present invention allows the normal operation of the control VLAN to be ensured after the forwarding function of the ports on the ring within the control VLAN is opened, thus efficiently protecting the control VLAN from broadcast storm, and improving the anti-fault ability of the Ethernet in practical networking.

## Claims

1. A method for protecting a control VLAN (Virtual Local Network) in an Ethernet ring network comprising the following steps of:
in a process of creating an Ethernet Automatic Protection Switching (EAPS) domain, node devices defined as Ethernet network nodes setting a mode for processing received messages in the control VLAN according to additional information in a protocol message which can distinguish different types of protocol messages, and then opening forwarding function of ports in a ring within the control VLAN.

2. The method according to claim 1, wherein the additional information in the protocol message which can distinguish different types of protocol messages includes any one of destination MAC address field information and message type field information.

3. The method according to claim 2, wherein the Ethernet network nodes are classified as master nodes and transit nodes, and the mode for processing protocol messages may comprise:
when destination MAC addresses of the protocol messages are within an address range of control protocol messages, or when the protocol messages are indicated as control protocol messages by the message type field information, directly forwarding the protocol messages or forwarding and/or sending the protocol messages to a CPU for processing on transit nodes, and sending the protocol messages to a CPU for processing on a master node; and
when the destination MAC addresses of the protocol messages are outside the address range of the control protocol messages, or when the protocol messages are indicated as non-control protocol messages by the message type field information, directly discarding the protocol messages.

4. The method according to any one of claims 1 to 3, wherein before the step of the node devices setting the mode for processing the received messages in the control VLAN, the method further comprises:
closing the forwarding function of the ports on the ring within the control VLAN, and/or actively adding the ports on the ring to the control VLAN.

5. A system for protecting a control VLAN (Virtual Local Network) in an Ethernet ring network comprising a plurality of node devices defined as Ethernet nodes, wherein
the node devices are configured to, in a process of creating an Ethernet Automatic Protection Switching (EAPS) domain, set a mode for processing received messages in the control VLAN according to additional information in a protocol message which can distinguish different types of protocol messages, and then open forwarding function of ports in a ring within the control VLAN.

6. The system according to claim 5, wherein the additional information in the protocol message which can distinguish different types of protocol messages includes any one of destination MAC address field information and message type field information; and
the node devices is configured to set the mode for processing the received protocol messages in the control VLAN by:
when destination MAC addresses of the protocol messages are within an address range of control protocol messages, or when the protocol messages are indicated as control protocol messages by the message type field information, directly forwarding the protocol messages or forwarding and/or sending the protocol messages to a CPU for processing on transit nodes if the node devices are the transit nodes, and sending the protocol messages to a CPU for processing on a master node if the node device is the master node; and
when the destination MAC addresses of the protocol messages are outside the address range of the control protocol messages, or when the protocol messages are indicated as non-control protocol messages by the message type field information, directly discarding the protocol messages.

7. The system according to claim 5 or 6, wherein
the node devices is configured to, before setting the mode for processing the received messages in the control VLAN, close the forwarding function of the ports on the ring within the control VLAN, and/or actively add the ports on the ring to the control VLAN.

8. An apparatus for protecting a control VLAN (Virtual Local Network) in an Ethernet ring network, which is used in node devices defined as Ethernet nodes and comprises a domain creating module, a mode setting module and a port-on-ring preprocessing module, wherein
the domain creating module is configured to output a mode setting instruction to the mode setting module in a process of creating an Ethernet Automatic Protection Switching (EAPS) domain;
the mode setting module is configured to set a mode for processing received messages in the control VLAN according to additional information in a protocol message which can distinguish different types of protocol messages after receiving the mode setting instruction, and then output an instruction of opening a control VLAN function to the port-on-ring preprocessing module; and
the port-on-ring preprocessing module is configured to open forwarding function of ports on a ring within the control VLAN according to the instruction of opening the control VLAN function.

9. The apparatus according to claim 8, wherein
the additional information in the protocol message which can distinguish different types of protocol messages includes any one of destination MAC address field information and message type field information; and
the mode setting module is configured to set the mode for processing the received protocol messages in the control VLAN by:
when destination MAC addresses of the protocol messages are within an address range of control protocol messages, or when the protocol messages are indicated as control protocol messages by the message type field information, directly forwarding the protocol messages or forwarding and/or sending the protocol messages to a CPU for processing on transit nodes if the node devices are the transit nodes, and sending the protocol messages to a CPU for processing on a master node if the node device is the master node; and
when the destination MAC addresses of the protocol messages are outside the address range of the control protocol messages, or when the protocol messages are indicated as non-control protocol messages by the message type field information, directly discarding the protocol messages.

10. The apparatus according to claim 8 or 9, wherein
the domain creating module is further configured to output a preprocessing instruction to the port-on-ring preprocessing module before outputting the mode setting instruction; and
the port-on-ring preprocessing module is further configured to close the forwarding function of the ports on the ring within the control VLAN and/or actively add the ports on the ring to the control VLAN according to the preprocessing instruction.
